# EUROPÄISCHE PATENTSCHRIFT

(11) **EP 3 557 285 B1**
(45) Veröffentlichungstag und Bekanntmachung des Hinweises auf die Patenterteilung: **23.02.2022**
(21) Anmeldenummer: 18168313.7
(22) Anmeldetag: 19.04.2018
(51) Int. Cl.: G01S 17/08, G02B 7/14, G01S 7/481, G01S 7/497, G03B 17/14

(54) **LASERDISTANZMESSER**
LASER DISTANCE MEASURER
TÉLÉMÈTRE LASER

(43) Veröffentlichungstag der Anmeldung: 23.10.2019
(73) Patentinhaber: Leica Geosystems AG, 9435 Heerbrugg (CH)
(72) Erfinder: BÖSCH, Thomas, 6890 Lustenau (AT)
(74) Vertreter: Kaminski Harmann

(56) Entgegenhaltungen:
- DE-U1-202014 005 508
- JP-A- 2012 254 538

## Beschreibung

Die Erfindung betrifft einen Laserdistanzmesser, welcher einen optischen Sende- und Empfangspfad aufweist, wobei eine Optikhalterung die zwei Pfade optisch voneinander isoliert. Dabei ist die Optikhalterung mit einer Sende- und einer Empfangsoptik als 2-Komponenten-Spritzgussteil ausgebildet.

Zur laserbasierten Distanzmessung werden stationäre, bewegbare oder auch handhaltbare Distanzmessgeräte eingesetzt, welche eine optische Distanzmessung zu einem ausgewählten Messpunkt ausführen. Hierbei wird ein Laserstrahl emittiert und nach Reflektion am Ziel wieder empfangen und ausgewertet. Zur Bestimmung der Distanz stehen dabei verschiedene Messprinzipien zur Verfügung, wie z.B. Phasen- oder Laufzeitmessung.

Da für die meisten Anwendungen ein auf der anzumessenden Oberfläche sichtbarer Messpunkt vorteilhaft ist, werden zumeist rote Laser als Strahlungsquellen für die Distanzmessung verwendet.

Gattungsgemässe Laserdistanzmesser weisen Optikträger auf, welche einen Sende- und Empfangspfad zumindest teilweise optisch voneinander isolieren und deren Komponenten fixieren. Bekannte Ausführungsformen sind im nachfolgenden Stand der Technik zusammengefasst.

Der Optikträger des Distanzmessgeräts aus Dokument DE 102011076491 A1 dient der Aufnahme des optischen Senders und der strahlformenden Optik und ist als monolithisch ausgeführt beschrieben.

Der Optikträger des Distanzmessgeräts aus der Gebrauchsmusterschrift DE 202014005479 U1 ist einstückig aus einer Hart- und Weichkunststoffkomponente als 2-Komponenten-Spritzgussteil ausgebildet. Der Optikträger isoliert den Sende- und Empfangspfad optisch zumindest teilweise voneinander.

Der in Dokument WO 2010108706 A1 beschriebene Linsenhalter ist für die Verbindung mit einem Optikträger eines Distanzmessgeräts gedacht. Der Linsenhalter besteht aus einer lichtdurchlässigen und einer lichtundurchlässigen Kunststoffkomponente, wobei der lichtdurchlässige Bereich der Verbindungsfläche ein lokales Aushärten eines lichthärtenden Klebers ermöglicht. Der Linsenhalter kann als 2-Komponenten-Spritzgussteil ausgebildet sein.

Die Empfangsoptik des im Dokument DE 19804059 A1 beschriebenen Distanzmessgeräts ist als Linse mit Fresnel-Struktur ausgebildet. Die Linse kann beispielhaft als Spritzgussteil gefertigt werden.

Das Entfernungsmessgerät der DE 202014005508 U1 umfasst eine Halterung mit Kollimationslinsen, wobei die Halterung aus Kunststoff besteht und mittels Spritzgussverfahren herstellbar sein kann.

In der JP2012254538 A2 ist ein Verfahren beschrieben zur Herstellung eines Linsenhalters mit optischer Linse, wobei die Linse eine vernetzende Kunststoffkomponente ist und über eine Vernetzungsreaktion mit dem Linsenhalter verbunden wird.

Ein Nachteil der genannten Ausführungen von Laserdistanzmessern des Standes der Technik ist, dass es notwendig ist, die optischen Komponenten bei der Montage am Optikträger zu fixieren und zu justieren.

Aufgabe der Erfindung ist es, einen solchen Laserdistanzmesser mit einem geringeren konstruktiven Aufwand bereitzustellen.

Insbesondere ist es eine Aufgabe, einen solchen Laserdistanzmesser bereitzustellen, der mit weniger Montageschritten herstellbar ist.

Mindestens eine dieser Aufgaben wird durch die Umsetzung der kennzeichnenden Merkmale des unabhängigen Anspruchs gelöst. Merkmale, die die Erfindung in alternativer oder vorteilhafter Weise weiterbilden, sind den abhängigen Patentansprüchen zu entnehmen.

Der erfindungsgemäße insbesondere handhaltbare Laserdistanzmesser weist einen optischen Sende- und Empfangspfad auf. Dabei definieren ein optischer Sender, welcher Messstrahlen emittiert und eine Sendeoptik, welche die Messstrahlen entlang einer ersten optischen Achse in Richtung des Zielobjekts bündelt, den optischen Sendepfad und eine Empfangsoptik, welche die reflektierten Messstrahlen entlang einer zweiten optischen Achse in Richtung eines optischen Detektors bündelt, den Empfangspfad. Des Weiteren isoliert eine Optikhalterung den Sende- und Empfangspfad optisch vollständig voneinander und dient der Positionierung und Fixierung aller Komponenten des Sende- und Empfangspfades.

Dadurch sind sowohl die erste optische Achse des Sendepfades wie auch die zweite optische Achse des Empfangspfades relativ zur Optikhalterung definiert. Der optische Sender und Detektor sind zudem mit einem Schaltkreis auf einer ersten Leiterplatte (Printed Circuit Board PCB) verbunden, wobei ein zweites PCB die entsprechende Steuerungs- und Auswerteelektronik aufnimmt.

Erfindungsgemäss sind die Sendeoptik und die Empfangsoptik als für die Messstrahlen durchlässige Kunststoffkomponenten und die Optikhalterung als für die Messstrahlen undurchlässige Kunststoffkomponente ausgebildet. Weiters besteht erfindungsgemäss eine integrale Materialverbindung zwischen der Sendeoptik und der Optikhalterung und/oder der Empfangsoptik und der Optikhalterung, wobei der Materialverbund jeweils der Sendeoptik und der Empfangsoptik mit der Optikhalterung in Form eines 2-Komponenten-Spritzgussteils ausgebildet ist.

Durch Fertigung im 2-Komponenten-Spritzgussverfahren entfällt vorteilhaft die sonst übliche Justierung und Fixierung der Sende- und Empfangsoptik am Optikträger.

Weiters können die zwei Kunststoffkomponenten so aufeinander abgestimmt sein, dass der Unterschied der Wärmeausdehnungskoeffizienten vernachlässigbar ist, insbesondere weniger als 30% des Mittelwertes beträgt, und somit sich ändernde Einsatztemperaturen keine Spannungen in der Sende- bzw. Empfangsoptik verursachen, welche deren optischen Eigenschaften signifikant ändern.

In einer vorteilhaften Ausführungsform können die zwei Kunststoffkomponenten so aufeinander abgestimmt sein, dass die jeweiligen Erweichungstemperaturen ein Zusammenfliessen der Kunststoffe an den Verbindungsflächen erlauben und dadurch eine integrale Verbindung der Komponenten entsteht, welche die Anforderungen an die Schutzklasse IP67+ erfüllt. Dabei beträgt der Unterschied zwischen den Erweichungstemperaturen weniger als 20% des Mittelwerts.

Gemäss einer weiteren Ausführungsform können die zwei Kunststoffkomponenten so aufeinander abgestimmt sein, dass an der Verbindungsstelle eine Art Gradientenwerkstoff ausgebildet wird, welcher Vibrationen dämpft. Idealerweise werden dadurch Vibrationen der Optikhalterung, z.B. verursacht durch Stösse, nicht an die Sende- bzw. Empfangsoptik übertragen.

Weiters kann die Optikhalterung aus einer thermoplastisch teilkristallinen und lichtstreuenden Kunststoffkomponente ausgebildet sein. Erfindungsgemäß ist die Sende- und Empfangsoptik aus einer thermoplastisch amorphen und lichtdurchlässigen Kunststoffkomponente ausgebildet.

In einer weiteren Ausführungsform ist jeweils zwischen der Sendeoptik und der Optikhalterung und/oder der Empfangsoptik und der Optikhalterung eine weitere, weiche Kunststoffkomponente die als Verbindungsmaterial dient und gleichzeitig Vibrationen dämpft und Thermospannungen puffert ausgebildet.

Gemäss einer Ausführungsform des Laserdistanzmessers weist die Optikhalterung Positioniervorrichtungen in Form von Aussparungen und Verbindungselemente in Form von Vorbereitungen für Schraubverbindungen für die Positionierung und Fixierung der Komponenten des Sende- und Empfangspfades und der Leiterplatten auf.

Diese Positioniervorrichtungen und Verbindungselemente erlauben idealerweise eine exakte Fixierung der Komponenten relativ zueinander, sodass bei der Produktion von Distanzmessern die optischen Achsen relativ zu der Optikhalterung mit hoher Reproduzierbarkeit und vernachlässigbarem Justieraufwand gleich zu liegen kommen.

In einer vorteilhaften Ausführung kann der Laserdistanzmesser noch weitere Positioniervorrichtungen in Form von Aussparungen und Verbindungselemente in Form von Vorbereitungen für Schraubverbindungen für die Positionierung und Fixierung des Laserdistanzmessers in einem Messgerätgehäuse aufweisen.

Gemäss einer weiteren Ausführungsform kann der optische Sender bereits mit einer strahlformenden Optik ausgestattet sein, wobei dann die Sendeoptik vorteilhaft als Fenster ausgebildet ist. Hat der optische Sender noch keine strahlformende Optik, so kann die Sendeoptik als Linse, welche die emittierte Strahlung in Richtung des Zielobjekts bündelt, ausgebildet sein. Unabhängig von der Ausführungsform der Sendeoptik ist die Empfangsoptik vorteilhaft als Linse, welche die reflektierten Messstrahlen in Richtung des Detektors bündelt, ausgebildet.

Weiters kann der Laserdistanzmesser zusätzlich einen Neigungssensor aufweisen, welcher insbesondere an der Optikhalterung fixiert ist. Über den Neigungssensor kann der Distanzmesser eine Schrägmessfunktion bereitstellen. Dazu sind exakt justierte optische Achsen besonders wichtig, da ansonsten bei einem schrägen Anmessen eines Objektes zwischen der Schräge, die der Neigungssensor misst, und der Schräge der optischen Achse Diskrepanzen bestehen können, was zu ungenauen Messwerten führt. Dabei kann der Neigungssensor dazu dienen die optischen Achsen relativ zu einem Messgerätgehäuse exakt zu justieren - sowie nachzujustieren - sodass ein exakteres Messergebnis erzielt wird.

Gemäss einer weiteren vorteilhaften Ausführungsform können diffuse Reflexionen der emittierten Messstrahlen an einer Innenwand des durch die Optikhalterung definierten Sendepfades ausgekoppelt und als Referenzstrahlen entlang eines bekannten Pfades direkt auf den optischen Detektor gelenkt werden. Dabei erfolgt das Auskoppeln des Referenzstrahles ohne weitere Mittel wie z.B. einen Strahlteiler. Beispielsweise weist die Optikhalterung dafür eine Auskoppelöffnung, durch welche die diffus reflektierten Messstrahlen aus dem Sendepfad als Referenzstrahlen ausgekoppelt werden, auf.

Der Laserdistanzmesser kann zusätzlich Positioniervorrichtungen und/oder Verbindungselemente für eine Kamera und/oder ein Display und/oder ein Eingabemittel aufweisen. Dabei kann die Kamera zur Aufnahme von Bildern in Richtung des Zielobjekts dienen. Das Display, insbesondere ein Touchscreen kann weiters zur Anzeige mittels der Kamera aufgenommener Bilder und/oder gemessener und/oder berechneter Entfernungen und/oder Winkel dienen. Ebenso kann der Touchscreen zur Eingabe von Zeichen und Ziffern und/oder zur Aktivierung von Funktionen genutzt werden. Das Eingabemittel, insbesondere ein Tastenfeld kann zum Anwählen von Funktionen dienen.

Der Laserdistanzmesser kann in einer weiteren Ausführungsform zusätzlich eine Sende- und Empfangseinheit zur drahtlosen Übermittlung von Bildern und Messwerten zur Dokumentation/Synchronisation und von Informationen zur Bedienung aufweisen.

Ein erfindungsgemässes Laserdistanzmessgerät wird nachfolgend anhand von einem in den Zeichnungen schematisch dargestellten konkreten Ausführungsbeispiel näher beschrieben, wobei auch auf weitere Vorteile der Erfindung eingegangen wird. Im Einzelnen zeigen:
- Fig. 1: ein handhaltbares Laserdistanzmessgerät mit einem erfindungsgemässen Laserdistanzmesser; und
- Fig. 2: einen erfindungsgemässen Laserdistanzmesser in der Übersicht; und
- Fig. 3: Schnittdarstellungen des in Figur 2 gezeigten, erfindungsgemässen Laserdistanzmessers.

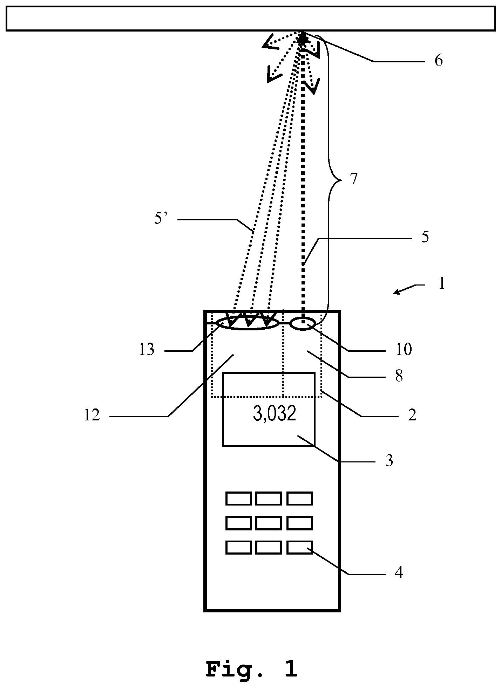

In Figur 1 ist ein gattungsgemässes Laserdistanzmessgerät 1 mit einem Laserdistanzmesser 2 in Aussenansicht dargestellt. Es weist ein Gehäuse auf, in dem die notwendigen elektronischen und optischen Komponenten angeordnet sind. Das Gehäuse ist dabei so ausgebildet, dass das Laserdistanzmessgerät 1 in der Hand gehalten werden kann. Das Laserdistanzmessgerät 1 beinhaltet an seiner Vorderseite den Laserdistanzmesser 2 mit einem optischen Sende- 8 und Empfangspfad 12. Auf der Oberseite des Geräts befinden sich eine Anzeigevorrichtung 3 in Form eines Displays und Eingabemittel 4 in Form eines Tastenfeldes.

Erfindungsgemäss werden über den optischen Sendepfad 8 Messstrahlen 5 zu einem Messpunkt 6 auf einer Wand ausgesendet. Die Wand weist eine natürlich rauhe Oberfläche auf, von der die Messstrahlen streuend reflektiert werden. Ein Teil der gestreut reflektierten Messstrahlen 5' wird von dem Empfangspfad 12 eingesammelt, detektiert und in ein elektrisches Signal umgewandelt. Das Signal wird in an sich bekannter Weise zum Bestimmen des digitalen Werts der Distanz 7 von einer elektronischen Schaltung ausgewertet. Zur Distanzermittlung kann z. B. eine Phasen- oder Laufzeitmessung eingesetzt werden. Der durch die Auswertung digital bestimmte Wert der gemessenen Distanz 7 - von hier beispielsweise 3,032 Metern - kann dann gegebenenfalls auf einem Display 3 einem Benutzer zur Verfügung gestellt werden.

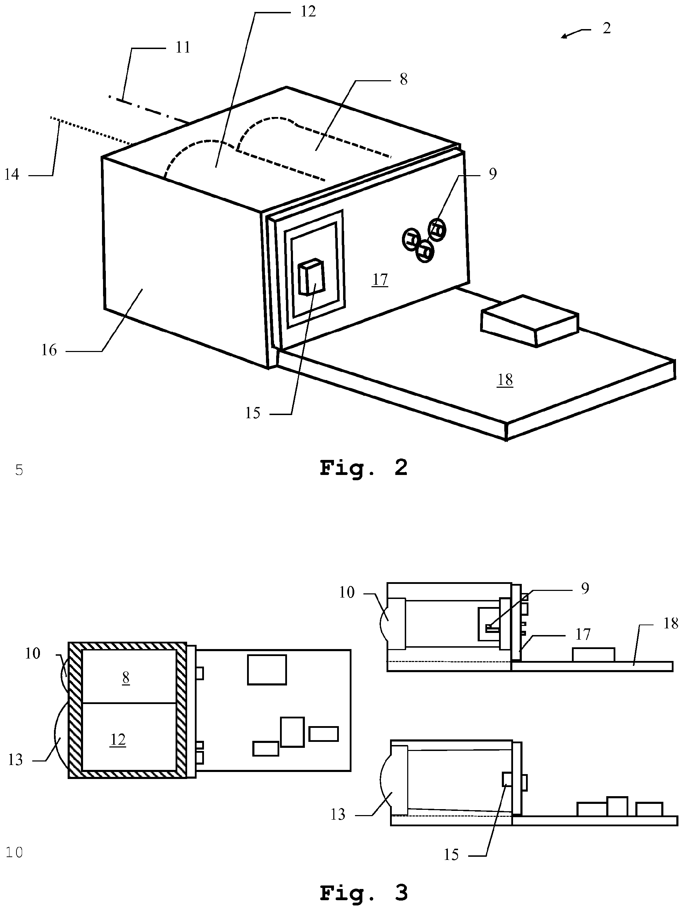

Figur 2 zeigt eine perspektivische Ansicht, und Figur 3 entsprechende Schnittdarstellungen eines erfindungsgemässen Laserdistanzmessers 2. Schematisch und prinzipiell angedeutet weist der Laserdistanzmesser 2 einen Sendepfad 8 mit einem Sender 9 und einer Sendeoptik 10 zur Aussendung und Bündelung von optischen Messstrahlen entlang einer ersten optischen Achse 11 in Richtung eines Zielobjekts auf. Optisch davon isoliert und in einer Ebene senkrecht zur ersten optischen Achse 11 parallel verschoben, befindet sich ein Empfangspfad 12 mit einer Empfangsoptik 13 zur Bündelung der von einer Oberfläche des Zielobjekts reflektierten Messstrahlen entlang einer zweiten optischen Achse 14 in Richtung eines Detektors 15. Zur Ansteuerung und zum Auslesen des Senders 9 bzw. des Detektors 15 sind diese mit einem ersten PCB 17 verbunden wobei sich die Steuerungs- und Auswerteelektronik auf einem zweiten PCB 18 befindet.

Die Anordnung des Senders 9, der Sendeoptik 10, des Detektors 15 und der Empfangsoptik 13 relativ zueinander ist bestimmt durch deren Fixierung an der Optikhalterung 16. Dabei werden die Sendeoptik 10 und die Empfangsoptik 13 im 2-Komponenten-Spritzgussverfahren mit der Optikhalterung 16 integral verbunden. Somit entfällt der Montageschritt, bei welchem die Sende- 10 und Empfangsoptik 13 mit der Optikhalterung 16 verklebt werden. Die Positionierung des Senders 9, Detektors 15 und der zwei PCBs 17, 18 erfolgt über entsprechende Aussparungen und Verbindungselemente wie z.B. Einpressvorrichtungen und Schraubverbindungen, welche bei der Herstellung des 2-Komponenten-Spritzgussteils ausgebildet werden. Beispielsweise kann die Anbringung einer Laserdiode am entsprechenden Ende des Sendepfades vorgesehen sein. Gegebenenfalls können noch weitere Aufnahmen oder Verbindungselemente zur Fixierung des Laserdistanzmessers in einem Messgerätgehäuse ausgebildet sein. Zwischen Sender 9 und Sendeoptik 10 und Detektor 15 und Empfangsoptik 13 wird ein zylindrisch geformter Sende- bzw. Empfangskanal bei der Herstellung des 2-Komponenten-Spritzgussteils ausgeformt. Diese zwei Kanäle sind optisch voneinander isoliert. Gegebenenfalls kann ein Umlenkmittel zum Umlenken der reflektierten Messstrahlen auf den Detektor 15 angeordnet sein. Insbesondere kann das Umlenkmittel als Filter ausgebildet sein, sodass nur die optischen Messfrequenzen, jedoch nicht Umgebungs- und Streulicht in Richtung des Detektors 15 umgelenkt werden.

Der Laserdistanzmesser kann weitere aus dem Stand der Technik bekannte und fachübliche Komponenten und/oder Funktionen aufweisen.

## Patentansprüche

1. Laserdistanzmesser (2), insbesondere handhaltbar, mit
• einem optischen Sendepfad (8), der einen optischen Sender (9) zur Emission und eine Sendeoptik (10) zur Bündelung von Messstrahlen (5) entlang einer ersten optischen Achse (11) in Richtung eines Zielobjekts aufweist,
• einem Empfangspfad (12), der eine Empfangsoptik (13) zur Bündelung reflektierter Messstrahlen (5') entlang einer zweiten optischen Achse (14) in Richtung eines optischen Detektors (15) aufweist,
• einer Optikhalterung (16), welche den Sendepfad (8) und den Empfangspfad (12) optisch vollständig voneinander isoliert, deren Komponenten fixiert und somit die optischen Achsen (11, 14) definiert,
• einer ersten Leiterplatte (17), welche den optischen Sender (9) und Detektor (15) aufnimmt, und
• einer zweiten Leiterplatte (18), welche die Steuerungs- und Auswerteelektronik aufnimmt,
• einer Sendeoptik (10) und einer Empfangsoptik (13), welche als für die Messstrahlen durchlässige Kunststoffkomponenten ausgebildet sind,
• sowie mit einer Optikhalterung (16), welche als eine für die Messstrahlen undurchlässige Kunststoffkomponente ausgebildet ist,
**dadurch gekennzeichnet, dass**
• jeweils zwischen der Sendeoptik (10) und der Optikhalterung (16) und/oder der Empfangsoptik (13) und der Optikhalterung (16), eine integrale Materialverbindung besteht,
• der Materialverbund jeweils der Sendeoptik (10) und der Empfangsoptik (13) mit der Optikhalterung (16) in Form eines 2-Komponenten-Spritzgussteils ausgebildet ist, und
• die Sende- und Empfangsoptik aus einer thermoplastisch amorphen Kunststoffkomponente ausgebildet ist.

2. Laserdistanzmesser nach Anspruch 1,
**dadurch gekennzeichnet, dass**
sich die Wärmeausdehnungskoeffizienten der zwei Kunststoffkomponenten weniger als 30% unterscheiden.

3. Laserdistanzmesser nach einem der vorangehenden Ansprüche, **dadurch gekennzeichnet, dass**
sich die Erweichungstemperaturen der zwei Kunststoffkomponenten weniger als 20% unterscheiden.

4. Laserdistanzmesser nach einem der vorangehenden Ansprüche, **dadurch gekennzeichnet, dass**
die Optikhalterung (16) aus einer teilkristallinen Kunststoffkomponente ausgebildet ist.

5. Laserdistanzmesser nach einem der vorangehenden Ansprüche, **dadurch gekennzeichnet, dass**
jeweils zwischen der Sendeoptik (10) und der Optikhalterung (16) und/oder der Empfangsoptik (13) und der Optikhalterung (16) eine weitere, weiche Kunststoffkomponente die als Verbindungsmaterial dient ausgebildet ist.

6. Laserdistanzmesser nach einem der vorangehenden Ansprüche, **dadurch gekennzeichnet, dass**
die Optikhalterung (16) Positioniervorrichtungen, insbesondere Aussparungen und Verbindungselemente, insbesondere Schraubverbindungen für die Komponenten des Sende- (8) und Empfangspfades (12) und die Leiterplatten (17, 18) aufweist.

7. Laserdistanzmesser nach einem der vorangehenden Ansprüche, **dadurch gekennzeichnet, dass**
der Laserdistanzmesser (2) Positioniervorrichtungen, insbesondere Aussparungen und Verbindungselemente, insbesondere Schraubverbindungen für die Positionierung und Fixierung in einem Messgerätgehäuse aufweist.

8. Laserdistanzmesser nach einem der vorangehenden Ansprüche, **dadurch gekennzeichnet, dass**
die Sendeoptik (10) als Fenster und die Empfangsoptik (13) als Linse ausgebildet sind.

9. Laserdistanzmesser nach einem der vorangehenden Ansprüche, **dadurch gekennzeichnet, dass**
die Sende- (10) und Empfangsoptik (13) als Linse ausgebildet sind.

10. Laserdistanzmesser nach einem der vorhergehenden Ansprüche, **dadurch gekennzeichnet, dass**
der Laserdistanzmesser (2) zusätzlich einen Neigungssensor aufweist.

11. Laserdistanzmesser nach einem der vorhergehenden Ansprüche, **dadurch gekennzeichnet, dass**
der Neigungssensor fix mit der Optikhalterung (16) verbunden ist.

12. Laserdistanzmesser nach einem der vorhergehenden Ansprüche, **dadurch gekennzeichnet, dass**
zwischen dem optischen Sender (9) und der Sendeoptik (10) der optische Sendepfad (8) eine Referenzstrahlöffnung für an einer Innenwand des Sendepfades (8) diffus reflektierte Messstrahlen, die als Referenzstrahlen auf den optischen Detektor (15) gelenkt werden, aufweist.

13. Laserdistanzmesser nach einem der vorhergehenden Ansprüche, **dadurch gekennzeichnet, dass** der Laserdistanzmesser (2) Positioniervorrichtungen und/oder Verbindungselemente für
• eine Kamera zur Aufnahme von Bildern in Richtung des Zielobjekts, und/oder
• ein Display, insbesondere ein Touchscreen, zur
o Anzeige mittels der Kamera aufgenommener Bilder und/oder gemessener und/oder berechneter Entfernungen und Winkel und/oder
∘ Eingabe von Zeichen und Ziffern und/oder
∘ Aktivierung von Funktionen, und/oder
• ein Eingabemittel, insbesondere ein Tastenfeld, zum Anwählen von Funktionen
aufweist.

14. Laserdistanzmesser nach einem der vorhergehenden Ansprüche, **dadurch gekennzeichnet, dass**
der Laserdistanzmesser (2) eine Sende- und Empfangseinheit zur drahtlosen Übermittlung von Bildern und Messwerten zur Dokumentation/Synchronisation und von Informationen zur Bedienung aufweist.

## Claims

1. Laser distance meter (2), in particular handheld, having
• an optical emitting path (8), which comprises an optical emitter (9) for emitting and emitting optics (10) for bundling measuring beams (5) along a first optical axis (11) in the direction of a target object,
• a receiving path (12), which comprises receiving optics (13) for bundling reflected measuring beams (5') along a second optical axis (14) in the direction of an optical detector (15),
• an optics mount (16), which completely optically isolates the emitting path (8) and the receiving path (12) from one another, fixes the components thereof, and thus defines the optical axes (11, 14),
• a first printed circuit board (17), which accommodates the optical emitter (9) and detector (15), and
• a second printed circuit board (18), which accommodates the control and evaluation electronics,
• emitting optics (10) and receiving optics (13), which are designed as plastic components transmissive to the measuring beams,
• and an optics mount (16), which is designed as a plastic component opaque to the measuring beams,
**characterized in that**
• an integral material bond exists in each case between the emitting optics (10) and the optics mount (16) and/or the receiving optics (13) and the optics mount (16), and
• the material bond of respectively the emitting optics (10) and the receiving optics (13) with the optics mount (16) is designed in the form of a 2-component injection molded part, and
• the emitting optics and receiving optics are formed from a thermoplastic amorphous plastic component.

2. Laser distance meter according to Claim 1,
**characterized in that**
the coefficients of thermal expansion of the two plastic components differ by less than 30%.

3. Laser distance meter according to any one of the preceding claims,
**characterized in that**
the softening temperatures of the two plastic components differ by less than 20%.

4. Laser distance meter according to any one of the preceding claims,
**characterized in that**
the optics mount (16) is formed from a partially-crystalline plastic component.

5. Laser distance meter according to any one of the preceding claims,
**characterized in that**
a further, soft plastic component which is used as a bonding material is formed respectively between the emitting optics (10) and the optics mount (16) and/or the receiving optics (13) and the optics mount (16).

6. Laser distance meter according to any one of the preceding claims,
**characterized in that**
the optics mount (16) comprises positioning devices, in particular recesses and connecting elements, in particular screw connections for the components of the emitting path (8) and receiving path (12) and the printed circuit boards (17, 18).

7. Laser distance meter according to any one of the preceding claims,
**characterized in that**
the laser distance meter (2) comprises positioning devices, in particular recesses and connecting elements, in particular screw connections, for the positioning and fixing in a measuring device housing.

8. Laser distance meter according to any one of the preceding claims,
**characterized in that**
the emitting optics (10) are designed as a window and the receiving optics (13) are designed as a lens.

9. Laser distance meter according to any one of the preceding claims,
**characterized in that**
the emitting optics (10) and receiving optics (13) are designed as lenses.

10. Laser distance meter according to any one of the preceding claims, **characterized in that**
the laser distance meter (2) additionally comprises an inclination sensor.

11. Laser distance meter according to any one of the preceding claims, **characterized in that**
the inclination sensor is fixedly connected to the optics mount (16).

12. Laser distance meter according to any one of the preceding claims, **characterized in that**
between the optical emitter (9) and the emitting optics (10), the optical emitting path (8) comprises a reference beam opening for measuring beams diffusely reflected on an inner wall of the emitting path (8), which are deflected as reference beams onto the optical detector (15).

13. Laser distance meter according to any one of the preceding claims, **characterized in that** the laser distance meter (2) comprises positioning devices and/or connecting elements for
• a camera for recording images in the direction of the target object, and/or
• a display screen, in particular a touchscreen, for
∘ displaying images recorded by means of the camera and/or measured and/or computed distances and angles and/or
∘ inputting characters and numbers and/or
∘ activating functions, and/or
• an input means, in particular a keypad, for selecting functions.

14. Laser distance meter according to any one of the preceding claims, **characterized in that**
the laser distance meter (2) comprises a transmitting and receiving unit for wirelessly transmitting images and measured values for documentation/synchronization and items of information for operation.

## Revendications

1. Télémètre laser (2), en particulier portable, comportant :
• un chemin d'émission optique (8) qui présente un émetteur optique (9) pour l'émission et une optique d'émission (10) pour la focalisation de faisceaux de mesure (5) le long d'un premier axe optique (11) en direction d'un objet cible,
• un chemin de réception (12) qui présente une optique de réception (13) pour la focalisation de faisceaux de mesure réfléchis (5') le long d'un deuxième axe optique (14) en direction d'un détecteur optique (15),
• un support optique (16) qui isole optiquement complètement l'un de l'autre le chemin d'émission (8) et le chemin de réception (12), fixe leurs composants et définit ainsi les axes optiques (11, 14),
• une première carte de circuit imprimé (17) qui reçoit l'émetteur optique (9) et le détecteur (15), et
• une deuxième carte de circuit imprimé (18) qui reçoit l'électronique de commande et d'évaluation,
• une optique d'émission (10) et une optique de réception (13) qui sont réalisées sous la forme de composants en matière plastique perméables aux faisceaux de mesure,
• ainsi qu'un support optique (16) qui est réalisé sous la forme d'un composant en matière plastique imperméable aux faisceaux de mesure,
**caractérisé en ce que**
• il existe une liaison matérielle intégrale entre l'optique d'émission (10) et le support optique (16) et/ou entre l'optique de réception (13) et le support optique (16),
• l'assemblage de matériaux entre l'optique d'émission (10) et/ou l'optique de réception (13) avec le support d'optique (16) est réalisé sous la forme d'une pièce moulée par injection à deux composants, et
• l'optique d'émission et de réception est réalisée à partir d'un composant en matière plastique thermoplastique amorphe.

2. Télémètre laser selon la revendication 1,
**caractérisé en ce que**
les coefficients de dilatation thermique des deux composants en matière plastique diffèrent de moins de 30 %.

3. Télémètre laser selon l'une des revendications précédentes,
**caractérisé en ce que**
les températures de ramollissement des deux composants en matière plastique diffèrent de moins de 20 %.

4. Télémètre laser selon l'une des revendications précédentes,
**caractérisé en ce que**
le support optique (16) est réalisé à partir d'un composant en matière plastique semi-cristallin.

5. Télémètre laser selon l'une des revendications précédentes,
**caractérisé en ce**
**qu'**un autre composant en matière plastique souple qui sert de matériau de liaison est formé entre l'optique d'émission (10) et le support d'optique (16) et/ou entre l'optique de réception (13) et le support d'optique (16).

6. Télémètre laser selon l'une des revendications précédentes,
**caractérisé en ce que**
le support optique (16) présente des dispositifs de positionnement, en particulier des évidements et des éléments de liaison, en particulier des liaisons par vis pour les composants du chemin d'émission (8) et du chemin de réception (12) et les cartes de circuits imprimés (17, 18).

7. Télémètre laser selon l'une des revendications précédentes,
**caractérisé en ce que**
le télémètre laser (2) présente des dispositifs de positionnement, en particulier des évidements et des éléments de liaison, en particulier des liaisons par vis pour le positionnement et la fixation dans un boîtier d'appareil de mesure.

8. Télémètre laser selon l'une des revendications précédentes,
**caractérisé en ce que**
l'optique d'émission (10) est réalisée sous la forme d'une fenêtre et l'optique de réception (13) sous la forme d'une lentille.

9. Télémètre laser selon l'une des revendications précédentes,
**caractérisé en ce que**
l'optique d'émission (10) et l'optique de réception (13) sont réalisées sous la forme de lentilles.

10. Télémètre laser selon l'une des revendications précédentes,
**caractérisé en ce que**
le télémètre laser (2) présente en outre un capteur d'inclinaison.

11. Télémètre laser selon l'une des revendications précédentes,
**caractérisé en ce que**
le capteur d'inclinaison est relié de manière fixe au support optique (16).

12. Télémètre laser selon l'une des revendications précédentes,
**caractérisé en ce**
**qu'**entre l'émetteur optique (9) et l'optique d'émission (10), le chemin optique d'émission (8) présente une ouverture de faisceau de référence pour des faisceaux de mesure réfléchis de manière diffuse sur une paroi intérieure du chemin d'émission (8), qui sont dirigés en tant que faisceaux de référence sur le détecteur optique (15).

13. Télémètre laser selon l'une des revendications précédentes,
**caractérisé en ce que**
le télémètre laser (2) présente des dispositifs de positionnement et/ou des éléments de liaison pour
• une caméra pour la prise d'images en direction de l'objet cible, et/ou
• un écran, en particulier un écran tactile, pour
o l'affichage d'images prises au moyen de la caméra et/ou de distances et d'angles mesurés et/ou calculés et/ou
o l'entrée de caractères et de chiffres et/ou
o l'activation de fonctions, et/ou
• un moyen d'entrée, en particulier un clavier, pour la sélection de fonctions.

14. Télémètre laser selon l'une des revendications précédentes,
**caractérisé en ce que**
le télémètre laser (2) présente une unité d'émission et de réception pour la transmission sans fil d'images et de valeurs mesurées pour la documentation/synchronisation et d'informations pour l'utilisation.
